# EUROPÄISCHE PATENTSCHRIFT

(11) **EP 4 784 458 B1**
(45) Veröffentlichungstag und Bekanntmachung des Hinweises auf die Patenterteilung: **16.09.2026**
(21) Anmeldenummer: 24793972.1
(22) Anmeldetag: 26.09.2024
(51) Int. Cl.: B60W 50/00, B60W 50/04

(54) **VERFAHREN ZUR STEUERUNG EINER FAHRZEUGFLOTTE**
METHOD FOR CONTROLLING A VEHICLE FLEET
PROCÉDÉ DE COMMANDE D'UNE FLOTTE DE VÉHICULES

(30) Priorität: 28.09.2023 AT 507932023
(43) Veröffentlichungstag der Anmeldung: 05.08.2026
(73) Patentinhaber: AVL List GmbH, 8020 Graz (AT)
(72) Erfinder: GLENSVIG, Michael, 8020 Graz (AT)
(86) Internationale Anmeldenummer: PCT/AT2024/060374
(87) Internationale Veröffentlichungsnummer: WO 2025/065039

(56) Entgegenhaltungen:
- EP-A1- 3 050 739
- DE-A1- 102020 211 986
- US-A1- 2018 268 624

## Beschreibung

Die gegenständliche Erfindung betrifft ein Verfahren zur Steuerung einer Fahrzeugflotte, wobei die Fahrzeugflotte eine Mehrzahl an Fahrzeugen umfasst und in jedem Fahrzeug der Fahrzeugflotte mit zumindest einer Sensoreinheit des Fahrzeugs zumindest ein Fahrzeugparameter zumindest einer Fahrzeugkomponente des Fahrzeugs erfasst wird, wobei der zumindest eine Fahrzeugparameter einen Zustand der zumindest einen Fahrzeugkomponente beschreibt, wobei in einer von den Fahrzeugen der Fahrzeugflotte externen Recheneinheit für jedes Fahrzeug der Fahrzeugflotte ein Modell des Fahrzeugs mit zumindest einem Modellparameter betrieben wird, wobei der zumindest eine Modellparameter eine physikalische Eigenschaft des Fahrzeugs beschreibt, und das Modell aus dem zumindest einen Fahrzeugparameter der zumindest einen Fahrzeugkomponente zumindest einen Steuerparameter des zugeordneten Fahrzeugs ermittelt und der zumindest eine ermittelte Steuerparameter an das zugeordnete Fahrzeug übermittelt wird und von einer Steuereinheit des zugeordneten Fahrzeugs verwendet wird, um zum Betrieb des Fahrzeugs eine Funktion des Fahrzeugs zu steuern. Verfahren zur Steuerung von Fahrzeugen einer Fahrzeugflotte sind beispielsweise aus den Patentschriften DE 10 2020 211986 A1 und US 2018/268624 A1 bekannt.

Auf Grund der zunehmenden Komplexität von modernen Fahrzeugen und der Vielzahl an Sensoren und Aktoren werden Steuereinheiten mit hoher Rechenleistung in den Fahrzeugen verbaut, um die dementsprechende Datenmenge zu verarbeiten. Diese Steuereinheiten tragen nicht nur zu höheren Herstellungskosten der Fahrzeuge bei, sondern erhöhen auf Grund der hohen Rechenleistung folglich auch den Energieverbrauch des Fahrzeuges. Insbesondere bei rein batteriebetriebenen Fahrzeugen verringert sich dadurch die Reichweite. Bei konventionell angetriebenen Fahrzeugen mit Verbrennungsmotor erhöht sich der Energieverbrauch (z.B. Verbrauch von Benzin oder Diesel) und folglich auch der Schadstoffausstoß.

Grundsätzlich dient eine Steuereinheit (auch als Steuergerät bezeichnet) dazu, Steuerparameter auf Basis von Fahrzeugparametern (z.B. der Batterieladung, der Motorbetriebstemperatur, des Restsauerstoffgehalts im Abgas, usw.), welche durch die Sensoren des Fahrzeugs ermittelt werden, zu bestimmen. Mit diesen Steuerparametern wird folglich zum Betrieb des Fahrzeugs eine Funktion des Fahrzeugs gesteuert, beispielsweise eine Anpassung des Drehmoments des Antriebes, eine Einspritzmenge an Kraftstoff, angepasste Einstellungen des Kühlsystems oder der Abgasnachbehandlung usw. Ein Fahrzeugparameter wird am Fahrzeug gemessen, wofür entsprechende Sensorik am Fahrzeug vorhanden ist, oder wird (z.B. von der Steuereinheit) aus anderen Fahrzeugparametern ermittelt, beispielsweise berechnet oder aus vorhandenen Kennfeldern entnommen.

In der Steuereinheit ist ein digitales Modell des realen (physischen) Fahrzeugs oder von bestimmten Fahrzeugkomponenten hinterlegt, welches das Verhalten des realen Fahrzeuges oder zumindest einer Fahrzeugkomponente abbildet und zumindest einen Steuerparameter für die Steuerung des realen Fahrzeugs auf Basis zumindest einen Fahrzeugparameters bestimmt. Das Modell umfasst grundsätzlich Inputs, Outputs (die zumindest den zumindest einen Steuerparameter umfassen) und Modellparameter. Um das Modell betreiben zu können, sind den Modellparametern Modellparameterwerte zuzuweisen, was allgemein als das Parametrieren des Modells bezeichnet wird. Die Modellparameter beschreiben dabei physikalischen Eigenschaften (z.B. geometrische, kinematische, usw.) des realen Fahrzeugs, wobei das Modell mit dem zumindest einen Modellparameter parametriert wird, um das Verhalten des realen Fahrzeugs möglichst realitätsnahe abzubilden. Die Modellparameter, konkret die Modellparameterwerte definieren, wie das Modell auf bestimmte Inputs reagiert, also welche Werte die Outputs annehmen. Die Modellparameter basieren auf Daten, welche mittels realer Fahrzeuge oder Fahrzeugkomponenten in Versuchen (z.B. Prüfstände, Teststrecke) oder mittels empirischer Modelle des Fahrzeugs (z.B. numerische Simulation) ermittelt werden.

Das Modell ist dabei üblicherweise auf die notwendigsten Modellparameter des realen Fahrzeugs reduziert, um so die erforderliche Rechenleistung der Steuereinheit möglichst gering zu halten. Das Modell ist oftmals als mathematisches Modell hinterlegt und kann als Softwarecode implementiert, sein, der auf der Steuereinheit ausgeführt wird.

Um das reale Fahrzeug oder die Fahrzeugkomponente mit dem Modell jedoch realitätsnäher simulieren zu können, wird beispielsweise in US2022258751 A1 oder in US2022176938 A1 das Modell von der Steuereinheit im Fahrzeug in eine externe Recheneinheit (z.B. in einen Cloud-Server) ausgelagert. Damit können die Anforderungen an die Steuereinheit im Fahrzeug, wie etwa die Rechenleistung, reduziert werden und folglich sinkt der Energieverbrauch. Auf Grund der vielfach höheren Rechenleistung der externen Recheneinheit kann ein komplexeres und realitätsnäheres Modell des realen Fahrzeugs betrieben werden.

Das Modell wird für jedes Fahrzeug einer Fahrzeugflotte verwendet und über die Laufzeit auf Basis von Kunden- und Werkstattdaten aktualisiert. Die Fahrzeuge und deren Fahrzeugkomponenten altern über die Laufzeit jedoch unterschiedlich (z.B. auf Grund von Fahrstil, Einsatzgebiet, Witterungsverhältnisse, etc.). Dadurch ergeben sich Abweichungen zwischen dem Verhalten des realen (gealterten) Fahrzeugs und jenem Verhalten des Fahrzeugs, welches von dem Modell abgebildet wird, also des nicht gealterten Fahrzeugs. Folglich ermittelt das Modell die Steuerparameter auf Basis des nicht gealterten Fahrzeugs, wodurch das jeweilige Fahrzeug nicht optimal betrieben wird (z.B. durch einen erhöhten Energieverbrauch oder durch eine verschlechterte Abgasnachbehandlung). Dadurch können gegebenenfalls gesetzliche Zielvorgaben zum Einhalten einer Betriebskenngröße, wie etwa ein maximaler Energieverbrauch oder ein zulässigen Schadstoffausstoß des Fahrzeugs, nicht eingehalten werden.

Es ist daher eine Aufgabe der gegenständlichen Erfindung die Steuerung von Fahrzeugen einer Fahrzeugflotte zu verbessern, insbesondere den Betrieb des jeweiligen Fahrzeugs der Fahrzeugflotte zu optimieren.

Erfindungsgemäß wird die Aufgabe mit einem Verfahren zur Steuerung von Fahrzeugen einer Fahrzeugflotte dadurch gelöst, die Fahrzeugparameter und die daraus ermittelten Steuerparameter einer Anzahl an Fahrzeugen aus der Mehrzahl der Fahrzeuge der Fahrzeugflotte, vorzugsweise von allen Fahrzeugen der Fahrzeugflotte, gesammelt werden, um eine zeitliche Veränderung eines Fahrzeugparameters und/oder Steuerparameters in Abhängigkeit vom Alterungszustand der Anzahl an Fahrzeugen zu ermitteln und der zumindest eine Modellparameter eines Modells zumindest eines Fahrzeugs der Fahrzeugflotte, vorzugsweise zumindest eines Fahrzeugs der Anzahl an Fahrzeugen aus der Mehrzahl der Fahrzeuge der Fahrzeugflotte zu denen die Fahrzeugparameter und die daraus ermittelten Steuerparameter gesammelt werden, in Abhängigkeit von der zeitlichen Veränderung des Fahrzeugparameters und/oder Steuerparameters geändert wird, um die Einhaltung einer vorgegebenen Zielvorgabe einer Betriebskenngröße des zumindest einen Fahrzeugs der Fahrzeugflotte trotz Alterung des zumindest einen Fahrzeugs zu gewährleisten. Dadurch ist es möglich die Modellparameter der Modelle für jedes Fahrzeug individuell anzupassen, um die Alterung des jeweiligen Fahrzeugs in dessen Modell zu berücksichtigen und die Steuerung des jeweiligen Fahrzeugs dementsprechend anzupassen. Damit ergeben sich realitätsnähere und effizientere Modelle der Fahrzeuge, da diese das Verhalten des gealterten Fahrzeugs besser abbilden können. Durch das Sammeln der Fahrzeugparameter und der daraus ermittelten Steuerparameter der Fahrzeuge der Fahrzeugflotte ergeben sich weitere Vorteile. Beispielsweise können damit für die Fahrzeuge der Fahrzeugflotte Wartungsintervalle besser geplant werden, z.B. bevor eine Fahrzeugkomponente ausfällt. Zusätzlich kann damit die Entwicklung neuer Fahrzeuge verbessert werden, indem beispielsweise die gesammelten Fahrzeugparameter und Steuerparameter mit jenen aus Prototypen verglichen werden. Weiters können damit die Fahrzeuge einer Fahrzeugflotte, welche sich z.B. auf einer gleichen Strecke bewegen, besser aufeinander abgestimmt werden, um beispielsweise ausgebuchte Ladesäulen entlang der Strecke zu umgehen.

Vorteilhafterweise werden die Fahrzeugparameter und daraus ermittelten Steuerparameter der Anzahl an Fahrzeugen aus der Mehrzahl der Fahrzeuge der Fahrzeugflotte in der externen Recheneinheit gesammelt. Dadurch können diese beispielsweise für die Entwicklung neuer Fahrzeuge einfach abgerufen und verwendet werden.

Bevorzugt wird die zeitliche Veränderung des Fahrzeugparameters und/oder Steuerparameters mit einem Soll-Ist-Vergleich ermittelt wird, um den zumindest einen Modellparameter eines Modells des zumindest einen Fahrzeugs der Fahrzeugflotte zu ändern. Dadurch kann in einfacher Weise festgestellt werden, ob der zumindest eine Modellparameter des Modells noch aktuell ist oder ob das Fahrzeug gealtert ist und der zumindest eine Modellparameter dementsprechend angepasst wird.

Bevorzugt wird die zeitliche Veränderung des Fahrzeugparameters und/oder Steuerparameters aus einer vorgegebenen Kennlinie oder aus einem vorgegebenen Kennfeld ermittelt wird, um den zumindest einen Modellparameter eines Modells des zumindest einen Fahrzeugs der Fahrzeugflotte zu ändern. Alternativ oder zusätzlich zu einem Soll-Ist-Vergleich kann auch mit einer Kennlinie oder einem Kennfeld in einfacher Weise festgestellt werden, ob der zumindest eine Modellparameter des Modells noch aktuell ist oder ob das Fahrzeug gealtert ist und der zumindest eine Modellparameter dementsprechend angepasst wird.

Vorteilhaft empfängt die externe Recheneinheit den zumindest eine Fahrzeugparameter vom Fahrzeug über eine Kommunikationsverbindung, wobei die externe Recheneinheit den zumindest eine Steuerparameter an das zugeordnete Fahrzeug über die Kommunikationsverbindung übermittelt. Insbesondere durch den Ausbau des 5G Mobilfunknetzes können Informationen zwischen dem Fahrzeug und der externen Recheneinheit einfach ausgetauscht werden.

Vorteilhafterweise ermittelt bei unterbrochener Kommunikationsverbindung zwischen dem Fahrzeug und der externen Recheneinheit die Steuereinheit aus dem zumindest einen Fahrzeugparameter der zumindest einen Fahrzeugkomponente den zumindest einen Steuerparameter, um das Fahrzeug in einem Notbetriebsmodus zu steuern. Dadurch kann gewährleistet werden, dass notwendige Funktion zum sicheren Betrieb des Fahrzeuges oder wenn notwendig zu einer Fahrt in eine Werkstatt weiterhin ausgeführt werden können.

Vorteilhaft umfasst die Betriebskenngröße eine Geschwindigkeit und/oder ein Energieverbrauch und/oder eine Reichweite und/oder ein Schadstoffausstoß umfasst.

Die gegenständliche Erfindung wird nachfolgend unter Bezugnahme auf die Figuren 1 bis 2 näher erläutert, die beispielhaft, schematisch und nicht einschränkend vorteilhafte Ausgestaltungen der Erfindung zeigen. Dabei zeigt
Fig. 1 schematisch die Bestandteile des erfindungsgemäßen Verfahrens zur Steuerung einer Fahrzeugflotte, und
Fig. 2 ein beispielhafter Ablauf des Verfahrens zur Steuerung einer Mehrzahl an Fahrzeugen der Fahrzeugflotte.

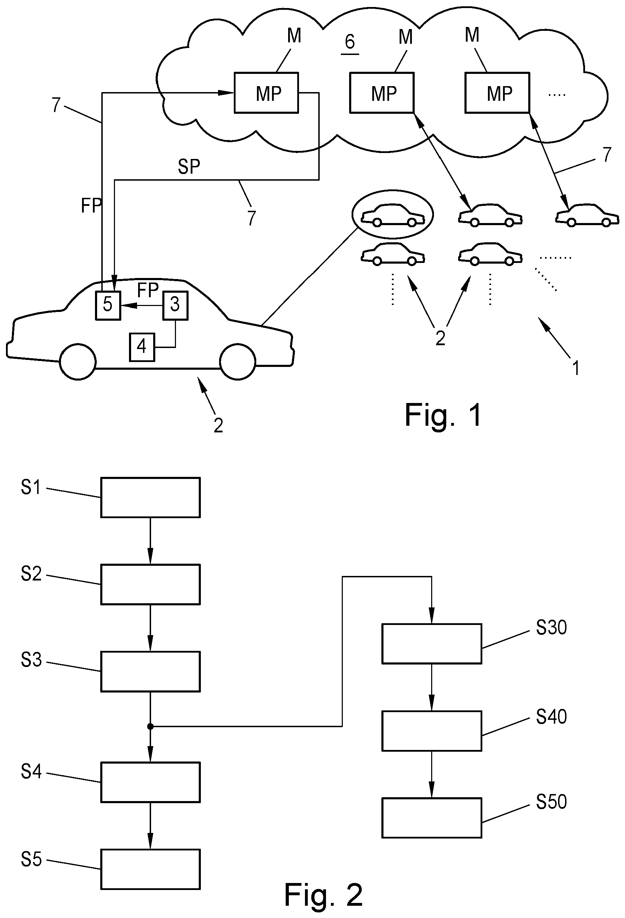

In Fig. 1 sind schematisch die Bestandteile für die Durchführung des erfindungsgemäßen Verfahrens zur Steuerung einer Fahrzeugflotte 1 dargestellt. Die Fahrzeugflotte 1 besteht aus einer bekannten oder festgelegten Mehrzahl an Fahrzeugen 2. Vorzugsweise setzt sich die Fahrzeugflotte 1 aus gleichartigen Fahrzeugen 2 zusammen. Unter gleichartigen Fahrzeugen 2 werden Fahrzeuge desselben Fahrzeugmodells mit gleichem Antriebssystem bezeichnet, oder auch Fahrzeuge unterschiedlicher Fahrzeugmodelle (auch unterschiedlicher Hersteller) mit zumindest einer gleichen Fahrzeugkomponente (wie einer gleichen Batterie oder gleichen Kühlbaugruppe). Es ist damit auch denkbar, dass die Fahrzeugflotte 1 Fahrzeuge 2 von unterschiedlichen Herstellern umfasst, wenn diese gleiche Fahrzeugkomponenten 4 aufweisen, also insbesondere Fahrzeugkomponenten 4 mit der gleichen Ausführung. Die Fahrzeuge 2 können dabei Personenkraftwagen, Lastkraftwagen, Busse, usw. sein. Als Antriebssystem können die Fahrzeuge 2 beispielsweise ein konventionelles oder ein rein elektrisches oder ein kombiniertes (hybrides) Antriebssystem aufweisen. Unter einem konventionellen Antriebssystem ist ein Antriebssystem mit Verbrennungsmotor, z.B. mit Benzin oder einem anderen Brennstoff angetrieben, zu verstehen. Der Begriff "gleiches Antriebssystem" umfasst neben der gleichen Art des Antriebssystems vorzugsweise auch eine gleiche Leistung des Antriebssystems, wobei aber auch unterschiedliche Leistungen des Antriebssystems möglich sind.

Jedes Fahrzeug 2 der Fahrzeugflotte 1 weist mehrere Fahrzeugkomponenten 4 auf, wobei in jedem Fahrzeug 2 mit zumindest einer Sensoreinheit 3 des Fahrzeugs 2 zumindest ein Fahrzeugparameter FP zumindest einer Fahrzeugkomponente 4 des Fahrzeugs 2 erfasst wird, vorzugsweise einer Fahrzeugkomponenten 4, die in gleicher Ausführung in allen Fahrzeugen 2 vorhanden ist. Das bedeutet natürlich, dass jeweils ein aktueller Wert des Fahrzeugparameters FP erfasst wird. Diese zumindest eine Fahrzeugkomponente 4 ist beispielsweise eine ganze Baugruppe, wie etwa ein Antriebsstrang, ein Bremsanlage, ein Kühlsystem usw., kann aber auch einzelne Komponenten des Fahrzeugs 2, wie etwa eine Batterie, eine Pumpe (Aktuator) des Kühlsystem, ein Abgasnachbehandlungssystem, etc., sein. Die zumindest eine Fahrzeugkomponente 4 ist dabei nicht auf Komponenten des Antriebssystems beschränkt. Vorzugsweise umfasst die zumindest eine Fahrzeugkomponente 4 jene Komponenten des Fahrzeuges 2, welche durch eine optimierte Steuerung Einfluss auf einen Energieverbrauch, einen Verschleiß, eine Emission, usw., des Fahrzeuges 2 haben und reduzieren können, also generell die Effizienz des Fahrzeuges 2 verbessern können.

Als zumindest eine Sensoreinheit 3 wird ein geeigneter Sensor verwendet, um den gewünschten Fahrzeugparameter FP erfassen zu können. In einem Fahrzeug 2 sind üblicherweise eine Fülle von Sensoren verbaut, die verschiedene Fahrzeugparameter FP erfassen. Auf diese Sensoren wird natürlich vorzugsweise zurückgegriffen. Es ist aber natürlich auch denkbar, ein Fahrzeug 2 für die Durchführung des erfindungsgemäßen Verfahrens mit einem bestimmten Sensor nachzurüsten. Als Sensoreinheit 3 kann beispielsweise ein Temperatursensor, ein Drehzahlsensor, ein Beschleunigungssensor, etc., im Fahrzeug 2 vorgesehen sein.

Der erfasste zumindest eine Fahrzeugparameter FP beschreibt einen Zustand der zumindest einen Fahrzeugkomponente 4. Der Zustand der zumindest einen Fahrzeugkomponente 4 kann beispielsweise eine Batterieladung, eine Motorbetriebstemperatur, ein Restsauerstoffgehalt im Abgas, ein Kühlwassertemperatur, etc., sein. Dieser kann aber auch Umgebungsbedingungen der Fahrzeugkomponente 4, wie z.B. eine Umgebungstemperatur beschreiben. Als Fahrzeugparameter FP kann auch eine Bedienung des Fahrzeugs 2 (durch einen Fahrer oder autonom), wie etwa ein Getriebegang, eine Stellung des Beschleunigungspedals, etc., erfasst werden.

Bei einem Defekt oder eine Fehlfunktion der zumindest einen Sensoreinheit 3 kann vorgesehen sein, eine visuelle und/oder akustische Anzeige im Fahrzeug 2 (z.B. am Armaturenbrett) zu aktivieren, um dem Fahrer mitzuteilen, dass eine Werkstatt aufgesucht werden soll.

In einer von den Fahrzeugen 2 der Fahrzeugflotte 1 externen Recheneinheit 6 wird für jedes Fahrzeug 2 der Fahrzeugflotte 1 ein Modell M des Fahrzeugs 2 mit zumindest einem Modellparameter MP betrieben, wobei der zumindest eine Modellparameter MP eine physikalische Eigenschaft des Fahrzeugs 2 oder der zumindest einen Fahrzeugkomponente 4 beschreibt. Es ist somit jedem Fahrzeug 2 der Fahrzeugflotte 1 ein Modell M zugeordnet. Hierbei ist es nicht unbedingt erforderlich, dass in allen Modellen M derselbe oder dieselben Modellparameter MP vorgesehen sind. Zusätzlich zu den Modellparametern MP umfasst das Modell M auch zumindest einen Input und zumindest einen Output. Die Modellparameter MP bilden, insbesondere über durch das Modell abgebildete Zusammenhänge (z.B. kinematischer, physikalischer, empirischer Natur), das Verhalten des realen Fahrzeugs nach. Als Modellparameter MP kann beispielsweise ein innerer Widerstand einer Batterie (als Fahrzeugkomponente 4) in Abhängigkeit eines Ladezustands oder ein Wirkungsgrad eines Kühlers (als Fahrzeugkomponente 4) in Abhängigkeit eines Massenstroms gegeben sein. Um das Modell M betreiben zu können, sind den Modellparametern MP Modellparameterwerte zuzuweisen, was allgemein als Parametrieren des Modells M bezeichnet wird. Durch das Parametrieren des Modells M wird im Wesentlichen festgelegt, mit welchem Wert des zumindest einen Outputs auf den zumindest einen Input reagiert wird. Ein Modell M wird vor der Verwendung parametriert und liegt in parametrierter Form vor. Die externe Recheneinheit 6 kann dabei beispielsweise ein Cloud-Server sein, auf dem das Modell M des jeweiligen Fahrzeugs 2 als mathematisches Modell hinterlegt und als Softwarecode implementiert sein kann, welcher von der externen Recheneinheit 6 ausgeführt wird. Als Modell M kann beispielsweise ein Digital Twin vorliegen, also ein digitales Abbild, welches das Verhalten des physischen Fahrzeugs 2 abbildet. Die externe Recheneinheit 6 ist dabei mit dem jeweiligen Fahrzeug 2 über eine geeignete drahtlose Kommunikationsverbindung 7 (z.B. über das Mobilfunknetz, vorzugsweise 5G) verbunden und dazu ausgebildet, den zumindest eine Fahrzeugparameter FP, vorzugsweise in Echtzeit, vom Fahrzeug 2 zu empfangen und dem Modell M als Input bereitzustellen.

Zusätzlich zu dem zumindest einen Fahrzeugparameter FP kann dem Modell M als Input auch eine Information über einen Standort des Fahrzeugs 2 (z.B. ein GPS-Signal), über Wetterbedingungen (z.B. Regen, Schnee, usw.), über eine geplante Route des Fahrzeugs 2 oder über Verkehrsbedingungen (z.B. Stau auf der geplanten Route) vorliegen.

Im Betrieb der Fahrzeuge 2 der Fahrzeugflotte 1 wird der zumindest eine Fahrzeugparameter FP natürlich laufend erfasst, üblicherweise in vorgegebenen zeitlichen Abständen, die für verschiedene Fahrzeugparameter FP auch verschieden sein können. Die Modelle M empfangen damit auch laufend den jeweiligen zumindest einen Fahrzeugparameter FP.

Das Modell M des Fahrzeugs 2 ermittelt aus dem zumindest einen erhaltenen Fahrzeugparameter FP der zumindest einen Fahrzeugkomponente 4 zumindest einen Steuerparameter SP des zugeordneten Fahrzeugs 2. Der zumindest eine ermittelte Steuerparameter SP, als Output des Modells M, wird an das zugeordnete Fahrzeug 2 übermittelt und von einer Steuereinheit 5 des zugeordneten Fahrzeugs 2 verwendet, um zum Betrieb des Fahrzeugs 2 eine Funktion des Fahrzeugs 2 zu steuern. Beispielsweise kann das Modell M des Fahrzeugs 2 auf Grund einer Motorbetriebstemperatur (als der zumindest eine Fahrzeugparameter FP) den zumindest einen Steuerparameter SP ermitteln, mit welchem die Steuereinheit 5 ein Kühlsystem des Fahrzeugs 2 steuert (z.B. Durchflussgeschwindigkeit einer Kühlflüssigkeit anpasst), um so die Motorbetriebstemperatur für den Betrieb des Fahrzeuges zu senken. Der zumindest eine ermittelte Steuerparameter SP wird dabei über die geeignete drahtlose Kommunikationsverbindung 7 an das zugeordnete Fahrzeug 2, vorzugsweise in Echtzeit, übermittelt. Neben dem zumindest einen Steuerparameter SP kann das Modell natürlich noch weitere Outputs bereitstellen.

Auch der Steuerparameter SP wird im Betrieb natürlich laufend ermittelt, vorzugsweise in vorgegebenen zeitlichen Abständen, und laufend an das Fahrzeug 2 übermittelt.

Die Steuereinheit 5 kann unterschiedliche Funktionen des Fahrzeugs 2 auf Basis des zumindest einen Steuerparameters SP steuern, wie z.B. das Drehmoment des Antriebs, die Abgasnachbehandlung, usw. Die Funktionen des Fahrzeugs 2 hängen grundsätzlich von der Art des Fahrzeugs 2 und dessen Antriebssystem ab. Dabei sind die Funktionen des Fahrzeugs 2 jedoch nicht auf das Antriebssystem beschränkt. Es können auch Funktionen von anderen Fahrzeugkomponenten 4 gesteuert werden, z.B. mit welchen der Fahrer oder andere Insassen des Fahrzeugs 2 während des Betriebs interagieren, wie etwa ein Informationssystem, eine Klimaanlage, etc. Beispielsweise könnte bei einer geringen Batterieladung auf Basis des zumindest einen Steuerparameter SP die Kühlwirkung der Klimaanlage reduziert werden oder das Informationssystem wird in einem Energiesparmodus betrieben, um so den Energieverbrauch des Fahrzeugs 2 zu senken.

Die Steuereinheit 5 kann dabei z.B. eine Anzahl an Mikroprozessoren und Speichereinheiten umfassen. Die Steuereinheit 5 kann weiters eine Kommunikationseinheit (nicht dargestellt) aufweisen, welche über die geeignete drahtlose Kommunikationsverbindung 7 mit der externen Recheneinheit 6 kommunizieren kann, um den zumindest einen Fahrzeugparameter FP an die externe Recheneinheit 6 zu übermitteln und den zumindest eine Steuerparameter SP von der externe Recheneinheit 6 zu empfangen. Es kann aber auch eine eigenständige Kommunikationseinheit vorgesehen sein, die mit der Steuereinheit 5 verbunden ist.

Bei unterbrochener Kommunikationsverbindung 7 zwischen dem Fahrzeug 2 und der externen Recheneinheit 6 wird der Betrieb des Fahrzeugs 2 vorzugsweise durch die Steuereinheit 5 des Fahrzeugs 2 gesteuert, wobei die Steuereinheit 5 aus dem zumindest einen Fahrzeugparameter FP der zumindest einen Fahrzeugkomponente 4 den zumindest einen Steuerparameter SP ermittelt, um das Fahrzeug 2 in einem Notbetriebsmodus zu steuern. Durch den Notbetriebsmodus (auch als "limp home mode" bezeichnet) werden weiterhin notwendige Funktionen des Fahrzeuges 2 gesteuert, bis erneut die Kommunikationsverbindung 7 zwischen dem Fahrzeug 2 und der externen Recheneinheit 6 aufgebaut wird. Während des Notbetriebsmodus kann beispielsweise als Maßnahme, um die Sicherheit zu erhöhen, die Geschwindigkeit des Fahrzeugs 2 reduziert werden. Der Notbetriebsmodus kann auch aktiviert werden, um dem Fahrer des Fahrzeugs 2 mitzuteilen mit dem Fahrzeug 2 eine Werkstatt aufzusuchen (z.B. bei einer defekten Sensoreinheit 3). Alternativ kann der Fahrzeugbetrieb auch beendet werden, bis erneut die Kommunikationsverbindung 7 zwischen dem Fahrzeug 2 und der externen Recheneinheit 6 aufgebaut wird.

Eine weitere Möglichkeit besteht darin, dass das Modell M z.B. auf Basis einer vorgegebenen Route und des Standorts des Fahrzeugs 2 den zumindest einen Steuerparameter SP für einen vorgegebene Zeitabschnitt (z.B. 10s) voraus ermittelt und diesen an das zugeordnete Fahrzeug 2 übermittelt. Dadurch kann, beispielsweise bei unterbrochener Kommunikationsverbindung 7 zu der externen Recheneinheit 6, die Steuereinheit 5 zum Betrieb des Fahrzeugs 2 eine Funktion des Fahrzeugs 2 weiterhin (zumindest im vorgegebenen Zeitabschnitt) auf Basis des zumindest einen Steuerparameter SP, welcher von dem Modell M ermittelt wurde, steuern.

Die Fahrzeugparameter FP und die daraus ermittelten Steuerparameter SP einer Anzahl an Fahrzeugen 2 aus der Mehrzahl der Fahrzeuge 2 der Fahrzeugflotte 1 werden, vorzugsweise in der externen Recheneinheit 6, gesammelt, um eine zeitliche Veränderung eines Fahrzeugparameters FP und/oder Steuerparameters SP in Abhängigkeit vom Alterungszustand des Fahrzeugs 2 zu ermitteln. Vorzugsweise werden die Fahrzeugparameter FP und die daraus ermittelten Steuerparameter SP aller Fahrzeuge 2 der Fahrzeugflotte 1 gesammelt, um eine zeitliche Veränderung eines Fahrzeugparameters FP und/oder Steuerparameters SP in Abhängigkeit vom Alterungszustand des Fahrzeugs 2 zu ermitteln. Die externe Recheneinheit 6 kann eine Speichereinheit (nicht dargestellt) umfassen, welche zum Speichern der gesammelten Fahrzeugparameter FP und Steuerparameter SP dient.

Da sich über die Laufzeit eines Fahrzeugs 2 dessen Alterungszustand bzw. der Alterungszustand der zumindest einen Fahrzeugkomponente 4 ändert (z.B. durch Verschleiß), ändert sich folglich auch die Steuerung und das Verhalten des Fahrzeugs 2. Beispielsweise kann sich der Alterungszustand eines Luft-Flüssigkeits-Kühlers im Fahrzeug 2 auf Grund zunehmender Verschmutzung auf einer Luftseite oder einer Veränderung einer Kühlflüssigkeit des Luft-Flüssigkeits-Kühlers verändern. Der Alterungszustand macht sich dabei in einer zeitlichen Veränderung des Fahrzeugparameters FP bemerkbar, wie im nachfolgenden Beispiel beschrieben wird. Auf Basis der zeitlichen Veränderung des Fahrzeugparameters FP kann auch eine zeitliche Veränderung des Steuerparameters SP notwendig sein, um trotz des AIterungszustands des Fahrzeugs 2 oder der zumindest einen Fahrzeugkomponente 4 (z.B. des Luft-Flüssigkeits-Kühlers) den Betrieb des Fahrzeugs 2 weiterhin zu steuern.

Um die zeitliche Veränderung des Fahrzeugparameters FP und/oder Steuerparameters SP zu ermitteln, kann beispielsweise ein Soll-Ist-Vergleich durchgeführt werden. Hierbei wird ein Istwert des Fahrzeugparameters FP, der beispielsweise vom Fahrzeug 2 erfasst und an die Recheneinheit 6 übermittelt wurde, mit einem vorgegebenen Sollwert des Fahrzeugparameters FP verglichen.

Ein Sollwert wird beispielsweise mittels realer Fahrzeuge 2 oder Fahrzeugkomponenten 4 beispielsweise in Versuchen (z.B. Prüfstände, Teststrecke) oder mittels empirischer Modelle des Fahrzeugs 2 (z.B. numerische Simulation) bestimmt. Der Sollwert kann auch während der Auslegung und Entwicklung eines Fahrzeugs 2 festgelegt und damit vorgegeben sein.

Beispielsweise wird eine Anzahl an Fahrzeugparametern FP für einen Zeitpunkt gemessen in dem sich das Fahrzeug 2 z.B. mit einer Geschwindigkeit von 80 km/h bewegt und Umgebungsluft mit einer Einlasstemperatur von 25°C in den Luft-Flüssigkeits-Kühler geleitet wird. Dabei sollte bei einer Durchflussgeschwindigkeit der Kühlflüssigkeit von 50l/min und einer Einlasstemperatur der Kühlflüssigkeit in den Luft-Wasser-Kühler von 85°C eine Auslasstemperatur der Kühlflüssigkeit aus dem Luft-Flüssigkeits-Kühler von 55°C (Sollwert) vorliegen. Dieser Sollwert für die Auslasstemperatur wird für den vorliegenden Zeitpunkt und/oder für einen vorgegebene Zeitabschnitt vorgegeben. Durch den Alterungszustand des Fahrzeugs 2 (z.B. bei Verschmutzung auf der Luftseite) kann sich jedoch die Auslasstemperatur aus dem Luft-Flüssigkeits-Kühler erhöhen und kann beispielsweise gemessen werden und 60°C (Istwert) betragen. Durch einen Soll-Ist-Vergleich, z.B. von der externen Recheneinheit 6 durchgeführt, kann über die erhöhte Auslasstemperatur auf die zeitliche Veränderung dieses Fahrzeugparameters FP in Abhängigkeit von dem Alterungszustand des Luft-Flüssigkeits-Kühlers des Fahrzeugs 2 geschlossen werden.

Alternativ oder zusätzlich zu einem Soll-Ist-Vergleich kann die zeitliche Veränderung des Fahrzeugparameters FP und/oder Steuerparameters SP in Abhängigkeit vom Alterungszustand des Fahrzeugs 2 aus einer im Betrieb des Fahrzeugs 2 ermittelten Kennlinie oder eines Kennfelds ermittelt werden. Beispielsweise kann eine Batteriekapazität einer Batterie des Fahrzeugs 2 als der Fahrzeugparameter FP über eine Anzahl von Ladezyklen als Kennlinie aufgezeichnet werden. Aus dieser Kennlinie ergibt sich folglich die zeitliche Veränderung (z.B. über eine gewisse Anzahl an Ladezyklen) des Fahrzeugparameters FP in Abhängigkeit von dem Alterungszustand der Batterie des Fahrzeugs 2. Die Kennlinie kann beispielsweise von der externen Recheneinheit 6 aufgezeichnet werden, wobei die externe Recheneinheit 6 aus der aufgezeichneten Kennlinie die zeitliche Veränderung bestimmt.

Der zumindest eine Modellparameter MP des Modells M zumindest eines Fahrzeugs 2 der Mehrzahl an Fahrzeugen 2 der Fahrzeugflotte 1 wird in Abhängigkeit von der zeitlichen Veränderung des Fahrzeugparameters FP und/oder Steuerparameters SP geändert, um die Einhaltung einer vorgegebenen Zielvorgabe einer Betriebskenngröße BK des Fahrzeugs 2 trotz Alterung des Fahrzeugs 2 zu gewährleisten. Das bedeutet natürlich, dass der Modellparameterwert geändert wird und nicht der Modellparameter MP geändert oder ausgetauscht wird. Vorzugsweise wird der zumindest eine Modellparameter MP des Modells M aller Fahrzeuge 2 der Fahrzeugflotte 1 in Abhängigkeit von der zeitlichen Veränderung des Fahrzeugparameters FP und/oder Steuerparameters SP geändert, um die Einhaltung einer vorgegebenen Zielvorgabe einer Betriebskenngröße BK jedes Fahrzeugs 2 trotz Alterung des Fahrzeugs 2 zu gewährleisten.

Es ist auch denkbar, einen Modellparameter MP eines Modells M eines Fahrzeugs 2 zu ändern, obwohl die Fahrzeugparameter FP und/oder Steuerparameter SP dieses Fahrzeugs 2 nicht gesammelt werden. Beispielsweise könnte ein Modell M eines Fahrzeugs 2 mit ähnlichem Alter wie ein Fahrzeug 2, dessen Fahrzeugparameter FP und/oder Steuerparameter SP gesammelt werden, analog zu diesem Fahrzeug 2 geändert werden, weil angenommen werden kann, dass sich eine ähnliche Alterung eingestellt hat.

Dabei wird der zumindest eine Modellparameter MP in vorgegebenen zeitlichen Abständen geändert, wobei dieser zeitliche Abstand üblicherweise deutlich größer ist, als der zeitliche Abstand mit dem ein Output des Modells M in Reaktion auf einen Input ermittelt wird. Beispielsweise kann der Modellparameter MP alle Sekunden, Minuten, Stunden, Tagen oder sogar noch langsamer geändert werden. Durch die Änderung des zumindest einen Modellparameters MP wird der Alterungszustand des Fahrzeugs 2 im Modells M berücksichtigt.

Um einen Modellparameter MP eines Modells M in Abhängigkeit von der zeitlichen Veränderung des Fahrzeugparameters FP und/oder Steuerparameters SP zu ändern kann im Modell zusätzliche zumindest ein Alterungsparameter vorgesehen sein. Der zumindest eine Alterungsparameter beschreibt den Alterungszustand des Fahrzeugs 2 oder der zumindest einen Fahrzeugkomponenten 4, wobei dieser von der zeitlichen Veränderung des Fahrzeugparameters FP und/oder Steuerparameters SP abhängig ist und in vorgegebenen zeitlichen Abständen angepasst wird. Beispielsweise kann der Alterungsparameter in vorgegebener Weise angepasst werden, wie erhöht oder erniedrigt werden, wenn ein vorgegebener Sollwert überschritten wird. Der Alterungsparameter kann aber auch laufend mit der Betriebszeit des Fahrzeugs 2 oder in Abhängigkeit von bestimmten Lastzuständen oder Lastzyklen des Fahrzeugs 2 angepasst werden. Der Alterungsparameter kann in vorgegebener Weise direkt oder indirekt auf den Modellparameter MP des Modells M wirken, also den Modellparameterwert direkt oder indirekt ändern.

Beispielsweise kann sich der innere Widerstand der Batterie (als Modellparameter MP) durch die Alterung der Batterie zeitlich ändern, wodurch sich während der Ladung der Batterie mehr Wärme entwickelt. Die zusätzliche Wärme wird als Temperaturanstieg in einer zeitlichen Veränderung des Fahrzeugparameters FP (Temperatur der Batterie) erkennbar. Folglich wird das Kühlsystem der Batterie dementsprechend gesteuert, z.B. wird die Durchflussgeschwindigkeit der Kühlflüssigkeit erhöht, um die zusätzliche Wärme abzuführen. Das kann über einen Alterungsparamater erfolgen, der additiv oder multiplikativ auf den Wert des inneren Widerstandes der Batterie (als Modellparameter MP) wirkt. Damit verändert sich der Modellparameter MP. Dies bedeutet als Konsequenz eine zeitliche Veränderung des Steuerparameters SP.

Ein anderes Beispiel wäre der Druckverlustfaktor (Modellparameter MP) ins Luftsystem. Über die Zeit steigt der Druckverlust durch Verschmutzung des Luftfilters an. Das könnte wieder über einen Alterungsparameter abgebildet werden.

Im obigen Beispiel des Luft-Flüssigkeits-Kühlers, könnte mit dem Modell M mit dem geänderten Modellparameter MP der zumindest eine Steuerparameter SP bestimmt werden, welcher von der Steuereinheit 5 des Fahrzeugs 2 verwendet wird, um den zumindest eine Fahrzeugparameter FP anzupassen und damit z.B. die Durchflussgeschwindigkeit der Kühlflüssigkeit von 50l/min auf 55l/min zu erhöhen.

Alternativ oder zusätzlich kann auch ein Service oder eine Reinigung der zumindest eine Fahrzeugkomponente 4 (z.B. eine Reinigung des Luftfilters des Luft-Flüssigkeits-Kühler) in einer Werkstatt den Alterungszustand reduzieren. Dabei kann beispielsweise nach der Reinigung der zumindest einen Fahrzeugkomponente 4 in der Werkstatt, der zumindest eine Modellparameter MP dementsprechend angepasst werden. Wird beispielsweise ein vorgegebener Alterungszustand der zumindest einen Fahrzeugkomponente 4 erreicht, kann der zumindest eine Steuerparameter SP auch eine visuelle und/oder akustische Anzeige im Fahrzeug 2 (z.B. am Armaturenbrett) aktivieren, um dem Fahrer mitzuteilen, dass eine Werkstatt aufgesucht werden soll. Bei Erreichen eines vorgegebenen maximalen Alterungszustand kann der Steuerparameter SP auch den Notbetriebsmodus aktivieren und z.B. eine Reduzierung der Geschwindigkeit des Fahrzeugs 2 einleiten oder andere Sicherheitsmaßnahmen steuern. Nach einer Reparatur des jeweiligen Fahrzeugs 2 (z.B. einem Tausch der zumindest eine Fahrzeugkomponente 4 auf Grund eines Defektes oder bei Erreichen eines vorgegebenen maximalen Alterungszustands kann der Modellparameter MP des Modells M des jeweiligen Fahrzeugs 2, beispielsweise in einer Werkstatt, auf einen vorgegebene Initialwert zurückgesetzt werden.

Die Betriebskenngröße BK kann z.B. eine Geschwindigkeit, ein Energieverbrauch, eine Reichweite oder ähnliches des Fahrzeugs 2 sein. Weiters ist es möglich, dass die vorgegebene Zielvorgabe der Betriebskenngröße BK gesetzlich vorgegeben wird, z.B. ein maximaler Schadstoffausstoß oder eine Höchstgeschwindigkeit. Dabei ist es auch denkbar, dass die vorgegebene Zielvorgabe der Betriebskenngröße BK je nach Standort des Fahrzeugs 2 für eine Strecke oder ein Gebiet (z.B. auf einer Landstraße oder in einer städtischen Umweltzone) angepasst wird. Die Zielvorgabe der Betriebskenngröße BK wird beispielsweise von der externen Recheneinheit 6 empfangen und kann im Modell M hinterlegt werden.

In Fig. 2 ist ein beispielhafter Ablauf des Verfahrens zur Steuerung der Mehrzahl an Fahrzeugen 2 der Fahrzeugflotte 1 dargestellt. Dabei ist ein erster Schritt S1 mit der zumindest einen Sensoreinheit 3 des jeweiligen Fahrzeugs 2 der Fahrzeugflotte 1 den zumindest einen Fahrzeugparameter FP der zumindest einen Fahrzeugkomponente 4 des jeweiligen Fahrzeugs 2 zu erfassen. In einem zweiten Schritt S2 wird der zumindest eine Fahrzeugparameter FP an die Steuereinheit 5 des jeweiligen Fahrzeugs 2 übermittelt (z.B. über eine geeignete Schnittstelle im Fahrzeug 2), wobei die Steuereinheit 5 den zumindest einen Fahrzeugparameter FP weiter an das Modell M des jeweiligen Fahrzeugs 2 in der externe Recheneinheit 6 übermittelt. Als Steuereinheit 5 wird insbesondere auch ein Steuereinheitenverbund verstanden, der mehrere separate Steuereinheiten umfasst. In einem dritten Schritt S3 ermittelt das Modell M des jeweiligen Fahrzeugs 2 aus dem zumindest einen Fahrzeugparameter FP (Input) den zumindest einen Steuerparameter SP (Output), wobei der Steuerparameter SP in einem vierten Schritt S4 an das zugeordnete Fahrzeug 2 übermittelt wird. In einem fünften Schritt S5 verwendet die Steuereinheit 5 des zugeordneten Fahrzeugs 2 den zumindest eine ermittelten Steuerparameter SP, um zum Betrieb des Fahrzeugs 2 eine Funktion des Fahrzeugs 2 zu steuern. In einem zum Schritt 3 zusätzlichen Schritt S30 werden die Fahrzeugparameter FP und daraus ermittelten Steuerparameter SP einer Anzahl von Fahrzeugen 2 aus der Mehrzahl der Fahrzeuge 2 der Fahrzeugflotte 1 gesammelt. In einem Schritt S40 wird dann die zeitliche Veränderung des Fahrzeugparameters FP und/oder Steuerparameters SP in Abhängigkeit vom Alterungszustand des jeweiligen Fahrzeugs 2 ermittelt (z.B. mit einem Soll-Ist-Vergleich). In einem Schritt S50 wird dann in Abhängigkeit von der ermittelten zeitlichen Veränderung des Fahrzeugparameters FP und/oder Steuerparameters SP der zumindest einen Modellparameter MP des Modells M des zugeordneten Fahrzeugs 2 geändert, um die Einhaltung der vorgegebenen Zielvorgabe der Betriebskenngröße BK des Fahrzeugs 2 trotz Alterung des Fahrzeugs 2 zu gewährleisten.

## Patentansprüche

1. Verfahren zur Steuerung einer Fahrzeugflotte (1), wobei die Fahrzeugflotte (1) eine Mehrzahl an Fahrzeugen (2) umfasst und in jedem Fahrzeug (2) der Fahrzeugflotte (1) mit zumindest einer Sensoreinheit (3) des Fahrzeugs (2) zumindest ein Fahrzeugparameter (FP) zumindest einer Fahrzeugkomponente (4) des Fahrzeugs (2) erfasst wird, wobei der zumindest eine Fahrzeugparameter (FP) einen Zustand der zumindest einen Fahrzeugkomponente (4) beschreibt, wobei in einer von den Fahrzeugen (2) der Fahrzeugflotte (1) externen Recheneinheit (6) für jedes Fahrzeug (2) der Fahrzeugflotte (1) ein Modell (M) des Fahrzeugs (2) mit zumindest einem Modellparameter (MP) betrieben wird, wobei der zumindest eine Modellparameter (MP) eine physikalische Eigenschaft des Fahrzeugs (2) beschreibt, und das Modell (M) aus dem zumindest einen Fahrzeugparameter (FP) der zumindest einen Fahrzeugkomponente (4) zumindest einen Steuerparameter (SP) des zugeordneten Fahrzeugs (2) ermittelt und der zumindest eine ermittelte Steuerparameter (SP) an das zugeordnete Fahrzeug (2) übermittelt wird und von einer Steuereinheit (5) des zugeordneten Fahrzeugs (2) verwendet wird, um zum Betrieb des Fahrzeugs (2) eine Funktion des Fahrzeugs (2) zu steuern, **dadurch gekennzeichnet, dass** die Fahrzeugparameter (FP) und die daraus ermittelten Steuerparameter (SP) einer Anzahl an Fahrzeugen (2) aus der Mehrzahl der Fahrzeuge (2) der Fahrzeugflotte (1), vorzugsweise von allen Fahrzeugen (2) der Fahrzeugflotte (1), gesammelt werden, um eine zeitliche Veränderung eines Fahrzeugparameters (FP) und/oder Steuerparameters (SP) in Abhängigkeit vom Alterungszustand der Anzahl an Fahrzeugen (2) zu ermitteln und der zumindest eine Modellparameter (MP) eines Modells (M) zumindest eines Fahrzeugs (2) der Fahrzeugflotte (1), vorzugsweise zumindest eines Fahrzeugs (2) der Anzahl an Fahrzeugen (2) aus der Mehrzahl der Fahrzeuge (2) der Fahrzeugflotte (1) zu denen die Fahrzeugparameter (FP) und die daraus ermittelten Steuerparameter (SP) gesammelt werden, in Abhängigkeit von der zeitlichen Veränderung des Fahrzeugparameters (FP) und/oder Steuerparameters (SP) geändert wird, um die Einhaltung einer vorgegebenen Zielvorgabe einer Betriebskenngröße (BK) des zumindest einen Fahrzeugs (2) der Fahrzeugflotte (1) trotz Alterung des zumindest einen Fahrzeugs (2) zu gewährleisten.

2. Verfahren nach Anspruch 1, **dadurch gekennzeichnet, dass** die Fahrzeugparameter (FP) und daraus ermittelten Steuerparameter (SP) der Anzahl an Fahrzeugen (2) aus der Mehrzahl der Fahrzeuge (2) der Fahrzeugflotte (1) in der externen Recheneinheit (6) gesammelt werden.

3. Verfahren nach Anspruch 1 oder 2, **dadurch gekennzeichnet, dass** die zeitliche Veränderung des Fahrzeugparameters (FP) und/oder Steuerparameters (SP) mit einem Soll-Ist-Vergleich ermittelt wird, um den zumindest einen Modellparameter (MP) eines Modells (M) des zumindest einen Fahrzeugs (2) der Fahrzeugflotte (1) zu ändern.

4. Verfahren nach einem der Ansprüche 1 bis 3, **dadurch gekennzeichnet, dass** die zeitliche Veränderung des Fahrzeugparameters (FP) und/oder Steuerparameters (SP) aus einer vorgegebenen Kennlinie oder aus einem vorgegebenen Kennfeld ermittelt wird, um den zumindest einen Modellparameter (MP) eines Modells (M) des zumindest einen Fahrzeugs (2) der Fahrzeugflotte (1) zu ändern.

5. Verfahren nach einem der Ansprüche 1 bis 4, **dadurch gekennzeichnet, dass** die externe Recheneinheit (6) den zumindest eine Fahrzeugparameter (FP) vom Fahrzeug (2) über eine Kommunikationsverbindung (7) empfängt, **und dass** die externe Recheneinheit (6) den zumindest eine Steuerparameter (SP) an das zugeordnete Fahrzeug (2) über die Kommunikationsverbindung (7) übermittelt.

6. Verfahren nach einem der Ansprüche 1 bis 5, **dadurch gekennzeichnet, dass** bei unterbrochener Kommunikationsverbindung (7) zwischen dem Fahrzeug (2) und der externen Recheneinheit (6) die Steuereinheit (5) aus dem zumindest einen Fahrzeugparameter (FP) der zumindest einen Fahrzeugkomponente (4) den zumindest einen Steuerparameter (SP) ermittelt, um das Fahrzeug (2) in einem Notbetriebsmodus zu steuern.

7. Verfahren nach einem der Ansprüche 1 bis 6, **dadurch gekennzeichnet, dass** die Betriebskenngröße (BK) eine Geschwindigkeit und/oder ein Energieverbrauch und/oder eine Reichweite und/oder ein Schadstoffausstoß umfasst.

## Claims

1. A method for controlling a vehicle fleet (1), wherein the vehicle fleet (1) comprises a plurality of vehicles (2) and in each vehicle (2) of the vehicle fleet (1) at least one vehicle parameter (FP) of at least one vehicle component (4) of the vehicle (2) is detected by means of at least one sensor unit (3) of the vehicle (2), wherein the at least one vehicle parameter (FP) describes a state of the at least one vehicle component (4), wherein, in a computing unit (6) external to the vehicles (2) of the vehicle fleet (1), a model (M) of the vehicle (2) having at least one model parameter (MP) is operated for each vehicle (2) of the vehicle fleet (1), wherein the at least one model parameter (MP) describes a physical property of the vehicle (2), and the model (M) determines from the at least one vehicle parameter (FP) of the at least one vehicle component (4) at least one control parameter (SP) of the associated vehicle (2), and the at least one determined control parameter (SP) is transmitted to the associated vehicle (2) and is used by a control unit (5) of the associated vehicle (2) in order to control a function of the vehicle (2) for operating the vehicle (2), **characterized in that** the vehicle parameters (FP) and the control parameters (SP) determined therefrom of a number of vehicles (2) from the plurality of vehicles (2) of the vehicle fleet (1), preferably of all vehicles (2) of the vehicle fleet (1), are collected in order to determine a change over time of a vehicle parameter (FP) and/or of a control parameter (SP) as a function of the ageing state of the number of vehicles (2), and the at least one model parameter (MP) of a model (M) of at least one vehicle (2) of the vehicle fleet (1), preferably of at least one vehicle (2) of the number of vehicles (2) from the plurality of vehicles (2) of the vehicle fleet (1) for which the vehicle parameters (FP) and the control parameters (SP) determined therefrom are collected, is changed as a function of the change over time of the vehicle parameter (FP) and/or of the control parameter (SP), in order to ensure compliance with a predefined target value of an operating characteristic variable (BK) of the at least one vehicle (2) of the vehicle fleet (1) despite ageing of the at least one vehicle (2).

2. The method according to claim 1, **characterized in that** the vehicle parameters (FP) and the control parameters (SP) determined therefrom of the number of vehicles (2) from the plurality of vehicles (2) of the vehicle fleet (1) are collected in the external computing unit (6).

3. The method according to claim 1 or 2, **characterized in that** the change over time of the vehicle parameter (FP) and/or of the control parameter (SP) is determined by means of a target/actual comparison, in order to change the at least one model parameter (MP) of a model (M) of the at least one vehicle (2) of the vehicle fleet (1).

4. The method according to any one of claims 1 to 3, **characterized in that** the change over time of the vehicle parameter (FP) and/or of the control parameter (SP) is determined from a predefined characteristic curve or from a predefined characteristic map, in order to change the at least one model parameter (MP) of a model (M) of the at least one vehicle (2) of the vehicle fleet (1).

5. The method according to any one of claims 1 to 4, **characterized in that** the external computing unit (6) receives the at least one vehicle parameter (FP) from the vehicle (2) via a communication connection (7), and **in that** the external computing unit (6) transmits the at least one control parameter (SP) to the associated vehicle (2) via the communication connection (7).

6. The method according to any one of claims 1 to 5, **characterized in that**, when the communication connection (7) between the vehicle (2) and the external computing unit (6) is interrupted, the control unit (5) determines the at least one control parameter (SP) from the at least one vehicle parameter (FP) of the at least one vehicle component (4), in order to control the vehicle (2) in an emergency operating mode.

7. The method according to any one of claims 1 to 6, **characterized in that** the operating characteristic variable (BK) comprises a speed and/or an energy consumption and/or a range and/or a pollutant emission.

## Revendications

1. Procédé de commande d'une flotte de véhicules (1), dans lequel la flotte de véhicules (1) comprend une pluralité de véhicules (2) et, dans chaque véhicule (2) de la flotte de véhicules (1), au moins un paramètre de véhicule (FP) d'au moins un composant de véhicule (4) du véhicule (2) est détecté au moyen d'au moins une unité de capteur (3) du véhicule (2), dans lequel ledit au moins un paramètre de véhicule (FP) décrit un état dudit au moins un composant de véhicule (4), dans lequel, dans une unité de calcul (6) externe aux véhicules (2) de la flotte de véhicules (1), un modèle (M) du véhicule (2) comportant au moins un paramètre de modèle (MP) est exploité pour chaque véhicule (2) de la flotte de véhicules (1), dans lequel ledit au moins un paramètre de modèle (MP) décrit une propriété physique du véhicule (2), et le modèle (M) détermine, à partir dudit au moins un paramètre de véhicule (FP) dudit au moins un composant de véhicule (4), au moins un paramètre de commande (SP) du véhicule associé (2), et ledit au moins un paramètre de commande déterminé (SP) est transmis au véhicule associé (2) et est utilisé par une unité de commande (5) du véhicule associé (2) afin de commander une fonction du véhicule (2) pour le fonctionnement du véhicule (2), **caractérisé en ce que** les paramètres de véhicule (FP) et les paramètres de commande (SP) déterminés à partir de ceux-ci d'un nombre de véhicules (2) parmi la pluralité de véhicules (2) de la flotte de véhicules (1), de préférence de tous les véhicules (2) de la flotte de véhicules (1), sont collectés afin de déterminer une variation dans le temps d'un paramètre de véhicule (FP) et/ou d'un paramètre de commande (SP) en fonction de l'état de vieillissement dudit nombre de véhicules (2), et **en ce que** ledit au moins un paramètre de modèle (MP) d'un modèle (M) d'au moins un véhicule (2) de la flotte de véhicules (1), de préférence d'au moins un véhicule (2) dudit nombre de véhicules (2) parmi la pluralité de véhicules (2) de la flotte de véhicules (1) pour lesquels les paramètres de véhicule (FP) et les paramètres de commande (SP) déterminés à partir de ceux-ci sont collectés, est modifié en fonction de la variation dans le temps du paramètre de véhicule (FP) et/ou du paramètre de commande (SP), afin de garantir le respect d'une valeur cible prédéfinie d'une grandeur caractéristique de fonctionnement (BK) dudit au moins un véhicule (2) de la flotte de véhicules (1) malgré le vieillissement dudit au moins un véhicule (2).

2. Procédé selon la revendication 1, **caractérisé en ce que** les paramètres de véhicule (FP) et les paramètres de commande (SP) déterminés à partir de ceux-ci dudit nombre de véhicules (2) parmi la pluralité de véhicules (2) de la flotte de véhicules (1) sont collectés dans l'unité de calcul externe (6).

3. Procédé selon la revendication 1 ou 2, **caractérisé en ce que** la variation dans le temps du paramètre de véhicule (FP) et/ou du paramètre de commande (SP) est déterminée au moyen d'une comparaison entre valeur de consigne et valeur réelle, afin de modifier ledit au moins un paramètre de modèle (MP) d'un modèle (M) dudit au moins un véhicule (2) de la flotte de véhicules (1).

4. Procédé selon l'une quelconque des revendications 1 à 3, **caractérisé en ce que** la variation dans le temps du paramètre de véhicule (FP) et/ou du paramètre de commande (SP) est déterminée à partir d'une courbe caractéristique prédéfinie ou d'une cartographie caractéristique prédéfinie, afin de modifier ledit au moins un paramètre de modèle (MP) d'un modèle (M) dudit au moins un véhicule (2) de la flotte de véhicules (1).

5. Procédé selon l'une quelconque des revendications 1 à 4, **caractérisé en ce que** l'unité de calcul externe (6) reçoit ledit au moins un paramètre de véhicule (FP) du véhicule (2) par une liaison de communication (7), et **en ce que** l'unité de calcul externe (6) transmet ledit au moins un paramètre de commande (SP) au véhicule associé (2) par la liaison de communication (7).

6. Procédé selon l'une quelconque des revendications 1 à 5, **caractérisé en ce que**, lorsque la liaison de communication (7) entre le véhicule (2) et l'unité de calcul externe (6) est interrompue, l'unité de commande (5) détermine ledit au moins un paramètre de commande (SP) à partir dudit au moins un paramètre de véhicule (FP) dudit au moins un composant de véhicule (4), afin de commander le véhicule (2) dans un mode de fonctionnement de secours.

7. Procédé selon l'une quelconque des revendications 1 à 6, **caractérisé en ce que** la grandeur caractéristique de fonctionnement (BK) comprend une vitesse et/ou une consommation d'énergie et/ou une autonomie et/ou une émission de polluants.
